(19) Europäisches Patentamt

European Patent Office

Office européen des brevets

(11) **EP 0 814 133 B1**

(12) **EUROPÄISCHE PATENTSCHRIFT**

(45) Veröffentlichungstag und Bekanntmachung des Hinweises auf die Patenterteilung:
**02.02.2000  Patentblatt 2000/05**

(51) Int Cl.⁷: $C09C\ 1/60$, $B01J\ 2/10$

(21) Anmeldenummer: **97108571.7**

(22) Anmeldetag: **28.05.1997**

(54) **Verfahren zur kontinuierlichen Trockengranulation von Pulverruss**

Process for dry continous granulation of carbon black

Procédé pour la granulation sèche en continu de noir de carbone

(84) Benannte Vertragsstaaten:
**DE ES FR GB IT NL PT**

(30) Priorität: **11.06.1996  DE 19623198**

(43) Veröffentlichungstag der Anmeldung:
**29.12.1997  Patentblatt 1997/52**

(73) Patentinhaber: **Degussa-Hüls Aktiengesellschaft
60287 Frankfurt am Main (DE)**

(72) Erfinder:
• **Vogler, Conny, Dr.
 53332 Bornheim (DE)**
• **Kopietz, Jan
 50374 Erftstadt (DE)**
• **Vogel, Karl, Dr.
 63755 Alzenau (DE)**

(56) Entgegenhaltungen:
**EP-A- 0 360 236          AU-B- 408 615
US-A- 2 422 989          US-A- 2 807 523
US-A- 4 162 287**

**Beschreibung**

Die vorliegende Erfindung betrifft ein Verfahren zur kontinuierlichen Trockengranulation von Pulverruß.

Bei der Verarbeitung von Industrierußen werden vorzugsweise granulierte Produkte eingesetzt, die häufig als Rußgranulat, Perlruß oder pelletierter Ruß bezeichnet werden.

Die einzelnen Rußgranulen oder Rußperlen sind kugelförmig. Je nach Anwendungsfall werden mittlere Perldurchmesser $d_{50}$ zwischen 0,125 und 2,0 mm angestrebt. Rußperlen mit Durchmessern unter 0,125 mm gelten als Feinanteil und sind zumeist unerwünscht. Bei Verwendung des granulierten Rußes als-Füllstoff in Gummimischungen und als Pigment für Kunststoffe oder Farben kommt es wesentlich auf eine gute Dispergierbarkeit des granulierten Rußes an. Da die Perlhärte und damit auch die Dispergierhärte bei gegebenem Granulierverfahren erfahrungsgemäß vom Durchmesser der Rußperlen abhängt, werden Rußgranulate mit möglichst enger Perlgrößenverteilungskurve angestrebt. Wünschenswert sind Perlgrößenverteilungen mit einem Verhältnis $d_{80}/d_{20}$ kleiner als 9.

Zur Granulation der Ruße werden derzeit großtechnisch zwei unterschiedliche Verfahren verwendet, die Naßgranulation in einer Perlmaschine mit anschließender-Trocknung und die Trockengranulation in einer Perltrommel. Beide Verfahren haben deutlich unterschiedliche Prozeßparameter, die in engem Zusammenhang mit den physikalischen Vorgängen bei der jeweiligen Agglomeration und mit den resultierenden Pelleteigenschaften stehen.

Für die Naßgranulation werden als Perlmaschinen Granulatoren mit Stachelwelle eingesetzt. Im folgenden werden alternativ zu Perlmaschine auch die Bezeichnungen Granulator und Stachelwellengranulator verwendet. Stachelwellengranulatoren bestehen aus einer liegend angeordneten feststehenden Trommel (im folgenden auch als Stator bezeichnet) mit einer darin sich drehenden Stachelwelle.

Bei den Stacheln handelt es sich um Stifte eines bestimmten Durchmessers und einer bestimmten Länge, die auf der Stachelwelle mit einem axialen Versatz gegeneinander längs einer oder mehrerer Schraubenlinien angeordnet sind. Die Stacheln sind radial ausgerichtet. Ihre Länge ist so bemessen, daß der Abstand der Stachelenden zur Innenwand des Stators gewöhnlich 2 bis 10 mm beträgt.

Zwischen der Achse der Stachelwelle und der Statorwandung befindet sich der für die Granulation zur Verfügung stehende Perlraum. Im Perlraum wird der Ruß vom Einlauf am einen Ende des Stators zum Auslauf am anderen Ende des Stators durch die sich drehende Stachelwelle befördert. Dabei erfolgt die Agglomeration durch Abrollen des Rußes an der stehenden Statorwandung. Die Verweilzeit des Rußes im Mischgranulator kann durch Anbringen einer Stauscheibe am Auslauf oder durch Anheben des Auslauf gegenüber dem Einlauf verlängert werden. Typische Perlmaschinen haben eine Länge von 1 bis 3,5 m und Durchmesser zwischen 200 und 760 mm.

In der Perlmaschine wird der pulverförmige Industrieruß mit Wasser, gegebenenfalls unter Zusatz eines Bindemittels, intensiv gemischt. Je nach Rußsorte werden bei Wassergehalten zwischen 40 und 60 Gew.-%, bezogen auf das Gesamtgewicht, kugelförmige Rußpellets erhalten. Die feuchten Pellets werden anschließend in einem weiteren Verfahrensschritt getrocknet (DE-AS 1 264 412; US 3,607,086; US 3,787,161 und US 4,222,727).

Bei der Naßgranulation erfolgt die Agglomeration durch Flüssigkeitsbrücken und Kapillarkräfte zwischen den Rußpartikeln. Die Größe der Kapillarkräfte erlaubt vergleichsweise hohe Umfangsgeschwindigkeiten von 10 bis 20 m/s an den Enden der Stacheln, wodurch eine intensive Vermischung und die nachfolgende Granulation bewirkt werden.

Die notwendige Verweilzeit für eine gute Ausbildung der Rußpellets liegt bei der Naßgranulation im Bereich von wenigen Sekunden, gewöhnlich unter 20 Sekunden. Durch eine Stauscheibe oder durch Anheben des Auflaufs gegenüber dem Einlauf kann die Verweilzeit bis in den Bereich von einigen Minuten verlängert werden.

Die erzielbare Perlhärte der durch Naßgranulation erhaltenen Rußpellets liegt ohne Einsatz von Bindemitteln im Bereich zwischen 0,1 bis 0,3 N bei Pelletdurchmessern zwischen 1,4 und 1,7 mm. Die mittlere Perlgröße ($d_{50}$-Wert) kann bei der Naßgranulation durch entsprechende Einstellung der Verfahrensparameter in einem Bereich zwischen 0,2 und 2,0 mm variiert werden.

Für die Trockengranulation werden Perltrommeln eingesetzt, die aus einem ebenfalls liegend angeordneten sich drehenden Rohr bestehen. Der Innenraum des Rohres wird als Perlraum bezeichnet. Zur Granulation wird der pulverförmige Industrieruß gemäß DE 38 32 404 vorverdichtet und in der Perltrommel durch Abrollen an der sich drehenden Rohrwandung granuliert. Die für die Trockengranulation verantwortlichen Van-Der-Waals und elektrostatischen Kräfte sind wesentlich geringer als die bei der Naßgranulation wirkenden Kapillarkräfte. Dementsprechend schonend muß die Granulation durchgeführt werden. Die Umfangsgeschwindigkeit der Perltrommel liegt daher nur bei 1 bis 2 m/s. Bei deutlich höheren Umfangsgeschwindigkeiten unterbleibt die Abrollbewegung aufgrund der hohen Zentrifugalkraft. Weiterhin ist die Krafteinwirkung auf die sich bildenden Pellets so groß, daß diese sofort wieder zerstört werden. Die erzielbare Pellethärte liegt gewöhnlich unter 0,1 N bei Pelletdurchmessern von 1,4 bis 1,7 mm. Die mittlere Perlgröße ($d_{50}$-Wert) liegt bei der konventionellen Trockengranulation gewöhnlich in einem Bereich zwischen 0,125 und 0,8 mm.

Wegen der niedrigen Van-Der-Waals-Kräfte ist es zur Einleitung der Granulation förderlich, dem Ruß Impfgut in Form von vorpelletiertem Ruß zuzugeben. Das Impfgut wird vor Beginn in die Perltrommel gegeben oder kontinuierlich während des Betriebs der Perltrommel in einer Menge von 1 bis 30 Gew.-% bezogen auf die Menge des Pul-

verruβes zugeführt. Das Impfgut sorgt dafür, daβ die für die Agglomeration notwendigen Keime stets in ausreichender Menge zur Verfügung stehen. Bei fehlender Zugabe von Impfgut kann es zum Ausbleiben der Trockengranulation oder zum Pelletzusammenbruch kommen.

Die typische Verweilzeit des Ruβes in der Trockenperltrommel beträgt 1 bis 4 Stunden. Um einen ausreichenden Ruβdurchsatz (in Kg/h) zu gewährleisten, müssen Trockenperltrommeln wesentlich gröβer als Perlmaschinen für die Naβgranulation sein. In der Produktion werden Trockenperltrommeln mit Durchmessern von 2 m und Längen von 18 m eingesetzt. Die Füllmengen solcher Trommeln liegen bei mehreren Tonnen. Dagegen betragen die Füllmengen von Perlmaschinen nur wenige Kilogramm.

Sowohl bei der Naβ- als auch bei der Trockengranulation können Additive zur Erhöhung der Perlhärte und/ oder zum Verbessern der Dispergierbarkeit eingesetzt werden.

Naβ granulierte Ruβe weisen wegen ihrer gröβeren Perlhärte im allgemeinen auch eine gröβere Dispergierhärte als trockengranulierte Ruβe auf. Sie werden daher hauptsächlich in der Gummi-Industrie eingesetzt. In den hoch viskosen Kautschukmassen lassen sich die naβ granulierten Ruβe gut dispergieren. Ihre groβe Perlhärte erlaubt einen leichten Transport in pneumatischen Förderanlagen.

Trocken granulierte Ruβe kommen hauptsächlich als Pigmente in Lacken, Druckfarben und Kunststoffen zur Anwendung. In diesen Anwendungsfeldern kommen jedoch auch noch in groβen Mengen Pulverruβe zum Einsatz, welche bei ihrer Handhabung zu einer großen Staubbelästigung am Arbeitsplatz führen können. Diese Staubbelästigung kann nur durch die Verwendung granulierter Ruβe vermindert werden. Es ist zu erwarten, daβ die Nachfrage nach granulierten Ruβen zukünftig steigen wird. Dies erfordert bei den Ruβproduzenten wegen der Gröβe der Anlagen erhebliche Investitionen.

Aufgabe der vorliegenden Erfindung ist es, ein Verfahren zur Trockengranulation von Ruβen anzugeben, welches die Trockengranulation bei gleichem Durchsatz wie in bekannten Trockenperltrommeln in wesentlich kleineren Anlagen ermöglicht oder den Durchsatz bestehender Anlagen erhöht und ein Ruβgranulat liefert, welches sich durch eine enge Verteilungskurve der Perldurchmesser, guter Dispergierbarkeit und möglichst geringem Feinanteil (Perldurchmesser < 0,125 mm) auszeichnet.

Diese Aufgabe wird durch ein Verfahren zur Trockengranulation von Pulverruβ gelöst, welches dadurch gekennzeichnet ist, daβ die Granulation in einem Stachelwellengranulator durchgeführt wird, der in einem kreiszylindrischen, trommelförmigen Stator mit einer Längsachse eine axial angeordnete Stachelwelle aufweist, die um die Längsachse des Stators rotiert und den Pulverruβ bei gleichzeitiger Granulation vom Einlauf zum Auslauf des Granulators befördert, wobei die Stacheln einen Durchmesser und eine Länge aufweisen und auf der Welle mit einem axialen Versatz gegeneinander längs einer Schraubenlinie um die Welle herum angeordnet sind und die maximale Umfangsgeschwindigkeit der Enden der Stacheln zwischen 1 und 6 m/s und die mittlere Verweilzeit des Ruβes im Granulator zwischen 20 und 600 Sekunden betragen.

Wie eingangs erläutert, werden Granulatoren mit Stachelwelle für die Naβgranulation von Ruβen eingesetzt. Die dabei zur Anwendung kommenden Umfangsgeschwindigkeiten der Enden der Stacheln von 10 bis 20 m/s und die kurzen Verweilzeiten des Ruβes im Granulator von nur wenigen Sekunden weichen erheblich von den entsprechenden Bedingungen in Trockenperltrommeln ab.

Es wurde nun gefunden, daβ auch in Stachelwellengranulatoren eine Trockenverperlung von Ruβen möglich ist. Erfindungsgemäβ muβ zu diesem Zweck die Umfangsgeschwindigkeit der Enden der Stacheln auf Werte zwischen 1 und 6 m/s verringert und die Verweilzeit des Ruβes im Granulator gegenüber der Naβgranulation auf 20 bis 600 Sekunden erhöht werden. Unter diesen Bedingungen wird auch ohne Wasserzusatz ein stabiles Ruβgranulat erhalten.

Die Verweilzeiten des Ruβes im Granulator sind wesentlich geringer als beim herkömmlichen Trockenperlverfahren. Der Mengendurchsatz $\dot{m}$ eines Granulators ist gleich dem Quotienten aus der Füllmenge $m_f$ des Granulators und der mittleren Verweilzeit $\bar{t}$

$$\dot{m} = m_f/\bar{t}.$$

Der Mengendurchsatz eines Granulators ist bei vergleichbarer Gröβe der Perlräume wesentlich gröβer als der Mengendurchsatz einer Perltrommel, bzw. bei gleichem Mengendurchsatz ist der notwendige Perlraum in einem Granulator wesentlich geringer als in einer Perltrommel. Die Ursache hierfür ist die wesentlich geringere Verweilzeit des Perlgutes im Granulator. Es ist überraschend, daβ im Granulator trotz der geringen Verweilzeiten Ruβe trocken granuliert werden können. Möglich wird die Trockengranulation durch Wahl von Betriebsbedingungen (Verweilzeit und Umfangsgeschwindigkeit der Enden der Stacheln), die unüblich für den normalen Betrieb des Granulators bei der Naβgranulation sind.

Der wesentliche Vorteil des neuen Verfahrens beruht auf der Tatsache, daβ eine geforderte Produktionsleistung an trocken granulierten Ruβen jetzt mit deutlich kleineren Anlagen erfüllt werden kann. Alternativ liefert es bei gleicher Anlagengröβe eine wesentlich höhere Produktionsleistung. Die erfindungsgemäβen Variationsbreiten für die

Umfangsgeschwindigkeiten der Enden der Stacheln und die mittleren Verweilzeiten dienen zur Anpassung der Granulateigenschaften an die geforderten Produktspezifikationen bei Verwendung von unterschiedlich großen Granulatoren. Durch Änderung der Größe des Granulators können Granulationsleistungen bis über 2000 Kg/h unter Beibehaltung der gewünschten Granulateigenschaften erhalten werden.

Der Pulverruß wird dem Einlauf des Granulators gewöhnlich mit Hilfe einer Förderschnecke zugeführt. Der Rußdurchsatz beziehungsweise Mengendurchsatz des Granulators ist daher gleich der Förderrate der Förderschnecke und kann somit in weiten Grenzen eingestellt werden. Füllmenge und Verweilzeit können durch Anheben des Auslaufs gegenüber dem Einlauf verlängert werden. Der sich dabei ergebende Winkel zwischen der Achse des Granulators und der Horizontalen kann etwa zwischen 0 und 20° verändert werden.

Füllmenge und Verweilzeit werden weiterhin durch die Drehzahl der Stachelwelle beeinflußt. Bei gleichbleibender Rußzufuhr (konstanter Rußdurchsatz) verringern sich mit steigender Drehzahl die Füllmenge und Verweilzeit proportional zueinander.

Die bevorzugten Verweilzeiten im erfindungsgemäßen Verfahren liegen im Bereich zwischen 20 und 180 Sekunden. Unterhalb von 20 Sekunden ist der Agglomerationsvorgang noch nicht in ausreichendem Maße fortgeschritten, und das Granulat weist daher noch einen hohen Feinanteil von mehr als 20 % auf. Verweilzeiten von mehr als 600 Sekunden sind gewöhnlich wegen der nach oben begrenzten Füllmenge nur bei - technisch wenig interessanten - geringen Rußdurchsätzen möglich.

Die geringere Füllmenge des Granulators gegenüber einer Perltrommel mit gleichem Rußdurchsatz ist vorteilhaft. Im Falle einer Störung des Granulationsverfahrens liegen nur entsprechend geringere Mengen des Rußes außerhalb der Spezifikation und müssen entsorgt werden als es bei der Perltrommel der Fall ist.

Während der Granulation kann es zu unerwünschten Ablagerungen von Ruß auf der Innenwand des Stators kommen. Diese Ablagerungen bergen die Gefahr in sich, daß einzelne Rußplacken von der Wand abplatzen und das angestrebte, homogen dispergierbare Rußgranulat durch festere und damit schlechter dispergierbare Rußplacken verunreinigen. Im Extremfall kann es sogar zu einem Zusammenbruch der Granulation führen. Die Dicke der Rußablagerungen auf der Statorwand sollte daher so gering wie möglich gehalten oder sogar völlig vermieden werden. Hierfür eignen sich verschiedene Maßnahmen.

Die mögliche Dicke der Rußablagerungen kann zum Beispiel dadurch minimiert werden, daß die Länge der Stacheln so gewählt wird, daß der lichte Abstand zwischen den Enden der Stacheln und der Statorwand nur 0,5 bis 3 mm beträgt und der axiale Versatz zwischen benachbarten Stacheln kleiner als ihr Durchmesser gemacht wird, so daß eine lückenlose Überdeckung der Stacheln längs der Achse der Stachelwelle gegeben ist. Zu diesem Zweck können die Stacheln auf der Stachelwelle auch längs zweier oder mehrerer Schraubenlinien angeordnet werden.

Darüber hinaus sollten die Enden der Stacheln nicht spitz zulaufen oder schräg angeschnitten sein, wie es von der herkömmlichen Naßgranulation bekannt ist. Die Endflächen der Stacheln sollten vielmehr von ebenen Schnittflächen gebildet werden, die senkrecht zur Längsausdehnung der Stacheln ausgrichtet sind. Hierdurch kann die Dicke der eventuellen Rußablagerungen so gering wie möglich gehalten werden.

Als weitere Maßnahme zur Vermeidung oder Verlangsamung von Rußablagerungen auf der Statorwand kann eine Temperierung des Stators auf eine Temperatur zwischen 50 und 150, bevorzugt zwischen 80 und 120°C, vorgesehen werden. Als weitere vorteilhafte Maßnahme können der Stator und die Stacheln mit Hilfe eines Vibrators zu Schwingungen angeregt werden. Frequenz und Amplitude der Schwingungen werden dabei so abgestimmt, daß die Rußablagerungen minimiert werden. Frequenzen zwischen 50 und 300 Hz haben sich bei dem für die Versuche verwendeten Pilotgranulator als vorteilhaft erwiesen.

Mit dem erfindungsgemäßen Verfahren können prinzipiell alle Rußtypen trocken granuliert werden. Es hat sich gezeigt, daß Ruße mit niedriger spezifischer Oberfläche und niedriger Struktur sehr gut granulierbar sind. Ruße mit hoher spezifischer Oberfläche und hoher Struktur sind gut granulierbar. Dagegen sind Ruße mit hoher spezifischer Oberfläche und niedriger Struktur und Ruße mit niedriger spezifischer Oberfläche und hoher Struktur schwer zu granulieren. Zur Einleitung der Agglomeration ist es daher zweckmäßig, dem Pulverruß Rußgranulat als Agglomerationskeime (im folgenden auch als Impfgut bezeichnet) beizumengen. Bevorzugt wird ein Rußgranulat derselben Rußtype, die granuliert werden soll, eingesetzt. Abhängig von den Granuliereigenschaften des Rußes können ihm bis zu 50 Gew.-% Rußgranulat zugemischt werden. Bevorzugt wird das Rußgranulat in einer Menge von 5 bis 15 Gew.-% dem Pulverruß zugemischt. Bei leicht granulierbaren Rußtypen kann die Zugabe von Rußgranulat ganz unterbleiben oder kurze Zeit nach Beginn der Granulation beendet werden.

Eine weitere Verbesserung der Granulierwirkung kann erzielt werden, wenn der Pulverruß auf Stampfdichten im Bereich zwischen 150 und 300 g/l verdichtet wird, bevor er dem Granulator zugeführt wird. Die Vorverdichtung kann in bekannter Weise zum Beispiel mit Hilfe von Vakuumfilterwalzen vorgenommen werden.

Das erfindungsgemäße Verfahren ist nicht auf eine bestimmte Größe des Stachelwellengranulators beschränkt. Soll die Produktionskapazität durch Vergrößern des Granulators erhöht werden, so müssen die Verfahrensparameter (Umfangsgeschwindigkeit der Stacheln und mittlere Verweilzeit im Granulator) im Rahmen der angegebenen Bereiche angepaßt werden, um auch mit der größeren Anlage ein Rußgranulat mit etwa gleichen Eigenschaften wie im kleineren Granulator zu erhalten. In den Beispielen wird ein Pilotgranulator mit einem Innendurchmesser des Stators von 20 cm verwendet. Dieser Granulator weist eine Granulierkapazität von etwa 60 Kg/h auf. Für großtechnische Anwendungen werden dagegen Granulierkapazitäten bis zu 2000 Kg/h und mehr benötigt. Für solche Kapazitäten muß der Innendurchmesser des Stators auf etwa 700 bis 800 mm erhöht werden.

Obwohl mit dem beschriebenen Verfahren ein sehr homogenes und hochwertiges Granulat erhältlich ist, welches ohne weitere Nachbehandlung verwendbar ist, sieht eine bevorzugte Ausführungsform des Verfahrens vor, die erfindungsgemäße Trockengranulation als Vorgranulation für ein konventionelles Trockenperlverfahren in einer Trockenperltrommel zu verwenden. Durch Vorschalten des Stachelwellengranulators vor eine Trockenperltrommel kann deren Perlkapazität um den Faktor 1,5 bis 2,5 erhöht werden.

Im folgenden wird das erfindungsgemäße Verfahren anhand einiger Beispiele erläutert. Es zeigen

Figur 1: Granulator mit Stachelwelle zur Durchführung des erfindungsgemäßen Verfahrens.

Figur 2: Verfahrensfließbild zur Durchführung des erfindungsgemäßen Verfahrens.

Figur 3: Granulator mit nachgeschalteter Trockenpertrommel.

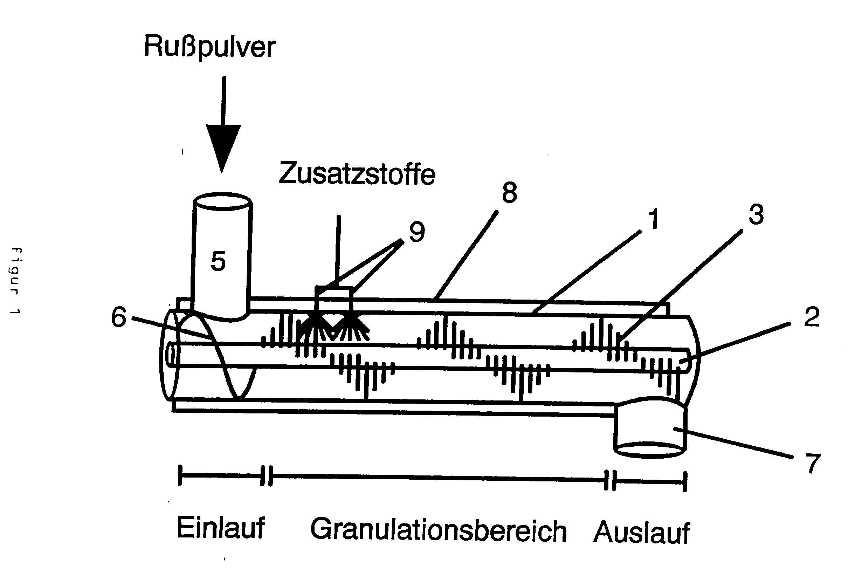

Das erfindungsgemäße Trockengranulationsverfahren wird in einem Granulator mit Stachelwelle durchgeführt. Der Aufbau eines solchen Granulators ist schematisch in Figur 1 dargestellt. Der Granulator besteht aus einem liegend angeordneten feststehenden Rohr 1, dem Stator, und einer darin axial angeordneten sich drehenden Stachelwelle 2 mit den wendelförmig angeordneten Stacheln 3. Zwischen der Stachelwelle 2 und dem Stator 1 befindet sich der Perlraum des Granulators. Der Pulverruß wird dem Granulator am Einlauf 5 zugeführt. Im Bereich des Einlaufs befindet sich auf der Stachelwelle eine Förderschnecke 6, die den Pulverruß in axialer Richtung zum Auslauf 7 fördert. Der Stator 1 ist doppelwandig ausgeführt und erlaubt die Temperierung der Statorwandung mit Hilfe einer Flüssigkeit 8. Längs des Stators befinden sich auf seiner Oberseite Durchgangsbohrungen, durch die Sprühdüsen 9 für Zusatzstoffe eingeführt werden können.

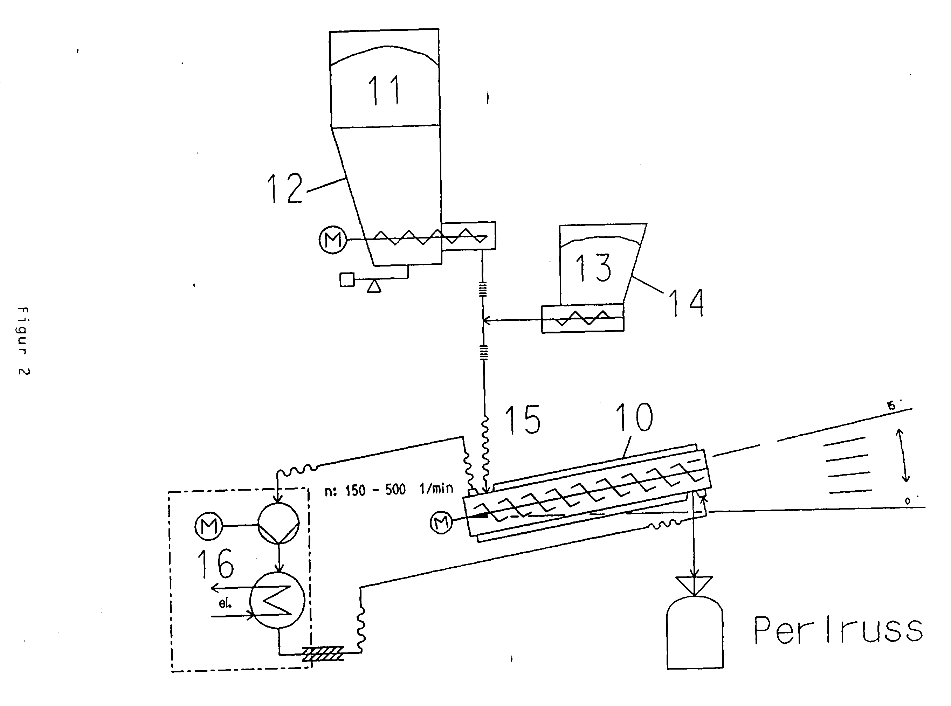

Figur 2 zeigt das Verfahrensfließbild für die Trockengranulation. Der Granulator 10 kann mit seiner Achse zur Einstellung der Verweilzeit gegenüber der Horizontalen um einen Neigungswinkel von 0 bis 20° geneigt werden. Hierzu wird der Auslauf des Granulators gegenüber dem Einlauf entsprechend angehoben. Pulverruß 11 und gegebenenfalls Impfgut 13 werden aus den Vorlagebehältern 12 und 14 dem Einlauf 15 des Granulators 10 zugeführt. Der Stator des Granulators wird mit Hilfe des Thermostaten 16 auf eine gewünschte Temperatur eingestellt.

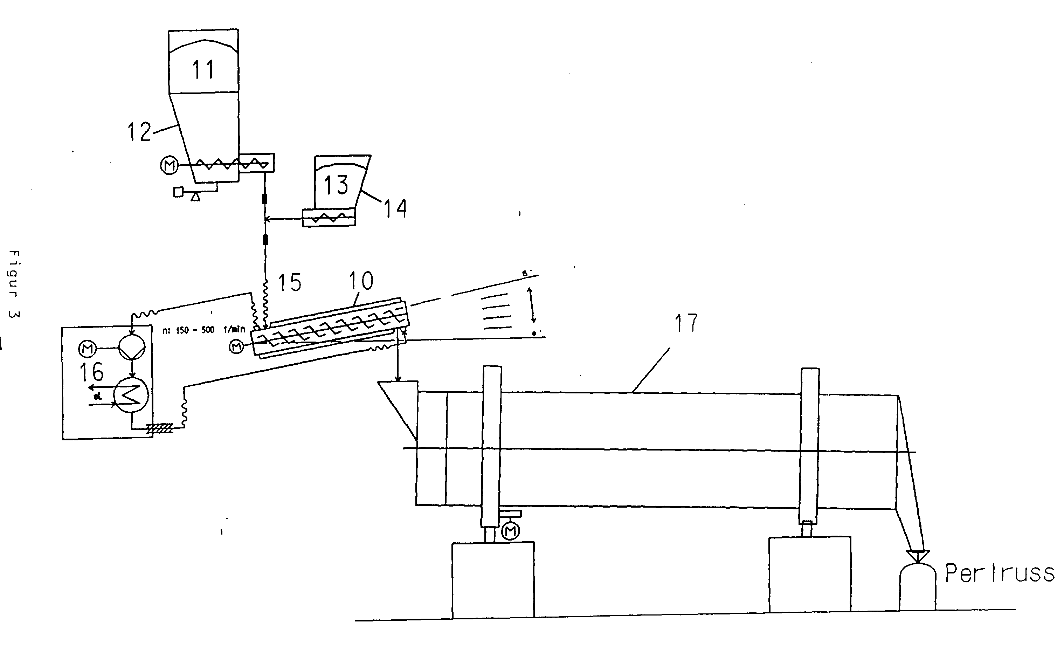

Figur 3 zeigt das Verfahrensfließbild bei Verwendung des Granulators als Vorgranulator vor einer Perltrommel 17.

**Beispiel 1:**

Mit dem Granulator nach Figur 1 wurden gemäß dem Verfahrensfließbild von Figur 2 verschiedene Rußtypen granuliert. Der für alle folgenden Beispiele verwendete Pilotgranulator hatte eine Länge von 120 cm und einen Innendurchmesser des Stators von 20 cm. Der Pilotgranulator wurde in allen Beispielen auf eine Temperatur von 100°C temperiert. Die Eigenschaften der erfindungsgemäß trockengranulierten Ruße wurden mit den Eigenschaften herkömmlich in einer Perltrommel von 2,4 m Durchmesser und 18 m Länge im Rahmen der täglichen Produktion trocken granulierter Ruße gleicher Rußtype verglichen. Diese Perltrommel hat zum Beispiel für Ruß 2 (siehe Tabelle 1) einen Rußdurchsatz von 1 t/h bei einer mittleren Verweilzeit von 2,5 h. Die Füllmenge dieser Trommel beträgt somit 2,5 t.

Mit dem Pilotgranulator wurden Rußdurchsätze bis 60 Kg/h erzielt. Eine Perltrommel gleicher Größe ist dagegen nur in der Lage maximal 20 Kg/h trocken zu granulieren. Die für die Versuche verwendeten Pulverruße sind mit ihren Eigenschaften in Tabelle 1 aufgelistet.

Tabelle 1

| Analytische Daten der verwendeten Pulverruße (Spezifikationen) | | | | | |
|---|---|---|---|---|---|
| | BET [m$^2$/g] | DBP [ml/100g] | 24M4 DBP [ml/100g] | Stampfdichte [g/l] | |
| | | | | unverdichtet | verdichtet |
| Ruß 1 | 265 | 123 | 105 | 120 | 220 |
| Ruß 2 | 120 | 106 | 81 | 120 | 190 |
| Ruß 3 | 80 | 106 | 80 | 160 | 240 |
| Ruß 4 | 80 | 72 | 65 | 308 | 360 |

Tabelle 1   (fortgesetzt)

| Analytische Daten der verwendeten Pulverruße (Spezifikationen) | | | | | |
|---|---|---|---|---|---|
| | BET [m$^2$/g] | DBP [ml/100g] | 24M4 DBP [ml/100g] | Stampfdichte [g/l] | |
| | | | | unverdichtet | verdichtet |
| Ruß 5 | 45 | 46 | 44 | 260 | 450 |
| Ruß 6 | 90 | 52 | 46 | 172 | 260 |
| Ruß 7 | 200 | 48 | 40 | 140 | 300 |

Die analytischen Daten der Pulverruße wurden nach folgenden Normen bestimmt:

| | | |
|---|---|---|
| BET | DIN 61 132 | |
| Jodzahl: | DIN 53 582 / | ASTM D-1510 |
| DBP-Absorption: | DIN 53 601 / | ASTM D-2414 |
| 24M4 DBP: | | ASTM D-3493 |
| Stampfdichte : | DIN 53 194 | |

An den granulierten Rußen wurden zusätzlich die Gesamtperlhärte, die Einzelperlhärte, die Feinanteile, der Abrieb, die Schüttdichte und die Perlgrößenverteilung nach folgenden Normen ermittelt:

| | | |
|---|---|---|
| Gesamtperlhärte | | ASTM D-1937 |
| Einzelperlhärte | DIN 53 603 / | ASTM D-3313 |
| Feinanteile/Abrieb | DIN 53 583 | |
| Schüttdichte | DIN 53 600 / | ASTM D-1513 |
| Perlgrößenverteilung | | ASTM D-1511 |

Die Einzelperlhärte wurde abweichend von der DIN-Normung auch an kleineren Perlen mit dem Durchmesser 0,5 mm oder 0,7 mm bestimmt. Dies ist notwendig, weil das Perlgut die Perlgrößen 1,4 mm oft in zu geringen Mengen enthält.

Zur Charakterisierung der Perlgrößenverteilung sind in den folgenden Tabellen die Größen $d_{50}$ und $d_{80}/d_{20}$ angegeben. Diese Werte wurden aus den nach ASTM D-1511 ermittelten Durchgangssummenkurven bestimmt. $d_{50}$ ist hierbei der theoretische Siebdurchmesser für 50 % Durchgang. Für $d_{80}$ und $d_{20}$ gilt entsprechendes. Das Verhältnis $d_{80}/d_{20}$ ist ein Maß für die Verteilungsbreite der Perlgrößenverteilungskurve.

Tabelle 2: Ergebnisse der Granulieruntersuchungen

| | | Ruß 1 | | Ruß 2 | |
|---|---|---|---|---|---|
| | | Granulator | Trommel | Granulator | Trommel |
| Rußdurchsatz | [kg/h] | 20 | | 40 | |
| Impfgut | [kg/h] | 2 | | 4 | |
| **Granulator** | | | | | |
| -Drehzahl | $[min^{-1}]$ | 160 | | 300 | |
| -Umfangsgeschw. | [m/s] | 1,7 | | 3,2 | |
| -Neigung | [Grad] | 10 | | 10 | |
| **Analyt. Daten** | | | | | |
| Jodzahl | [mg/g] | 277,6 | 299,2 | 124 | 127 |
| DBP | [ml/100g] | 122,5 | 117,3 | 106 | 104,8 |
| 24M4DBP | [ml/100g] | 100 | 97,4 | 81 | 81,3 |
| Feinanteil: 2 min | [%] | 6,4 | 13 | 8,6 | 12,8 |
| Abrieb | [%] | 11,4 | 4 | 14,6 | 4,6 |
| Gesamtperlhärte | [N] | < 2 | 8 | < 2 | < 2 |
| Einzelperlhärte: 0,5 mm | [N] | 0,014 | 0,014 | 0,007 | 0,011 |
| **Perlverteilung** | | | | | |
| $d_{50}$ | [mm] | 0,8 | 0,35 | 0,43 | 0,43 |
| $d_{80}/d_{20}$ | | 2,3 | 3,1 | 4,2 | 2,1 |
| Schüttdichte | [g/l] | 249 | 301 | 244 | 311 |

EP 0 814 133 B1

## Tabelle 2: Fortsetzung

| | | Ruß 3 | | Ruß 4 | | Ruß 5 | |
|---|---|---|---|---|---|---|---|
| | | Granulator | Trommel | Granulator | Trommel | Granulator | Trommel |
| Rußdurchsatz | [kg/h] | 40 | | 40 | | 40 | |
| Impfgut | [kg/h] | 4 | | 4 | | 4 | |
| **Granulator** | | | | | | | |
| -Drehzahl | [min$^{-1}$] | 300 | | 300 | | 300 | |
| -Umfangsgeschw. | [m/s] | 3,2 | | 3,2 | | 3,2 | |
| -Neigung | [Grad] | 10 | | 10 | | 10 | |
| **Analyt. Daten** | | | | | | | |
| Jodzahl | [mg/g] | 87,5 | 82,3 | 87 | 81,2 | 54,5 | 61,7 |
| DBP | [ml/100g] | 109 | 98,5 | 73 | 72,1 | 44,3 | 46 |
| 24M4DBP | [ml/100g] | 80 | 85,6 | 62 | 65,3 | 44,5 | 44,1 |
| Feinanteil: 2 min | [%] | 2 | 10 | 1,8 | 14,2 | 3,8 | 10,6 |
| Abrieb | [%] | 8,6 | 3 | 10,2 | 4,8 | 1,4 | 4,2 |
| Gesamtperlhärte | [N] | 2 | 2 | – | < 2 | 2 | 2 |
| Einzelperlhärte: 0,5 mm | [N] | 0,012 | 0,023 | 0,023 | 0,012 | 0,021 | 0,019 |
| **Perlverteilung** | | | | | | | |
| $d_{50}$ | [mm] | 0,75 | 0,45 | 0,68 | 0,23 | 0,3 | 0,23 |
| $d_{80}/d_{20}$ | | 1,9 | 3,1 | 2,7 | 3,4 | 2,6 | 3,5 |
| Schüttdichte | [g/l] | 255 | 372 | 369 | 408 | 501 | 511 |

EP 0 814 133 B1

## Tabelle 2: Fortsetzung

| | | Ruß 6 | | | Ruß 7 | | |
|---|---|---|---|---|---|---|---|
| | | Granulator | Granulator | Trommel | Granulator | Granulator | Trommel |
| Rußdurchsatz | [kg/h] | 20 | 20 | | 20 | 30 | |
| Impfgut | [kg/h] | 4 | - | | 20 | 20 | |
| **Granulator** | | | | | | | |
| -Drehzahl | $[min^{-1}]$ | 300 | 300 | | 300 | 300 | |
| -Umfangsgeschw. | [m/s] | 3,2 | 3,2 | | 3,2 | 3,2 | |
| -Neigung | [Grad] | 10 | 10 | | 10 | 10 | |
| **Analyt. Daten** | | | | | | | |
| Jodzahl | [mg/g] | 102,7 | 98,6 | 96,7 | 230,4 | 229,2 | 230,5 |
| DBP | [ml/100g] | 48 | 50,7 | 52,4 | 47 | 48 | 48,4 |
| 24M4DBP | [ml/100g] | 46,3 | 46,7 | 51,4 | 39,6 | 39,2 | 44,4 |
| Feinanteil: 2 min | [%] | 1,6 | 2,6 | 12,4 | 10,8 | 12 | 4,8 |
| Abrieb | [%] | 1,6 | 12,8 | 1,6 | 2,6 | 2 | 3,4 |
| Gesamtperlhärte | [N] | 5 | 6 | 9 | 5 | 3 | 3 |
| Einzelperlhärte: 0,7 mm | [N] | 0,044 | 0,042 | 0,04 | 0,058 | 0,062 | 0,044 |
| **Perlverteilung** | | | | | | | |
| $d_{50}$ | [mm] | 0,5 | 0,95 | 0,35 | 0,35 | 0,53 | 0,66 |
| $d_{80}/d_{20}$ | | 2,1 | 2,1 | 3,8 | 4,2 | 3,2 | 2,5 |
| Schüttdichte | [g/l] | 414 | 398 | 482 | 454 | 412 | 446 |

**Beispiel 2**

Es wurde der Einfluß der Verweilzeit auf das Granulationsverhalten von Ruß 2, welcher ein mittleres Granulationsverhalten aufweist, untersucht. Hierzu wurde bei einem konstanten Rußdurchsatz die mittlere Verweilzeit durch Ändern der Neigung der Achse des Granulators gegenüber der Horizontalen eingestellt. Die mittlere Verweilzeit wurde aus dem Verhältnis von Füllmenge und Rußdurchsatz ermittelt. Hierzu wurde bei dem jeweiligen Neigungswinkel die sich im stationären Betrieb einstellende Füllmenge ausgewogen. Einstellbedingungen und analytische Daten des granulierten Rußes sind in Tabelle 3 aufgelistet.

Tabelle 3: Trockengranulation von Ruß 2 bei unterschiedlichen Verweilzeiten

| | | Ruß 6 | | | |
|---|---|---|---|---|---|
| | | Granulator | Granulator | Granulator | Granulator |
| Rußdurchsatz | [kg/h] | 40 | 40 | 40 | 40 |
| Impfgut | [kg/h] | 8 | 8 | 8 | 8 |
| **Granulator** | | | | | |
| -Drehzahl | [min$^{-1}$] | 350 | 350 | 350 | 350 |
| -Umfangsgeschw. | [m/s] | 3,7 | 3,7 | 3,7 | 3,7 |
| -Neigung | [Grad] | 0 | 5 | 10 | 15 |
| Verweilzeit | [s] | 24,7 | 70,7 | 75,8 | 106 |
| **Analyt. Daten** | | | | | |
| Jodzahl | [mg/g] | 119,5 | 118,9 | 119,7 | 120,0 |
| DBP | [ml/100g] | 98,1 | 96,9 | 99,4 | 98,4 |
| Feinanteil: 2 min | [%] | 20,4 | 13,4 | 8,4 | 7,0 |
| Abrieb | [%] | 14 | 14,4 | 8,8 | 2,4 |
| Gesamtperlhärte | [N] | < 2 | < 2 | < 2 | < 2 |
| Einzelperlhärte: 0,7 mm | [N] | 0,025 | 0,025 | 0,017 | 0,019 |
| **Perlverteilung** | | | | | |
| $d_{50}$ | [mm] | 0,36 | 0,54 | 0,6 | 0,7 |
| $d_{80}/d_{20}$ | | 8,5 | 3,9 | 4,6 | 3 |
| Schüttdichte | [g/l] | 267 | 272 | 270 | 273 |

### Beispiel 3

Ruß 2 wurde verwendet, um die optimale Zugabe von granuliertem Ruß als Impfgut zu ermitteln. Die Impfgutmenge wurde von 10 bis 50 % variiert. Die Einstellbedingungen und analytischen Daten sind in Tabelle 4 zusammengefaßt. Mit steigender Impfgutmenge fallen Feinanteil und Abrieb zunächst ab, erreichen bei einer Impfmenge von 30 Gew.-% ein Minimum und steigen dann wieder an. Die Perlgrößenverteilung wird bei höherer Impfgutmenge deutlich eingeengt. Die Schüttdichte steigt leicht an. Die Perlhärte wird durch die Impfgutmenge kaum beeinflußt.

Die optimale Zugabe von Impfgut hängt von der zu granulierenden Rußsorte ab. Sie muß für jede Rußsorte gesondert bestimmt werden.

Tabelle 4: Variation der Impfgutmenge bei der Trockengranulation von Ruß 2

| | | | | | | |
|---|---|---|---|---|---|---|
| Rußdurchsatz | [kg/h] | 40 | 40 | 40 | 40 | 40 |
| Impfgut | [kg/h] | 20 | 16 | 12 | 8 | 4 |
| **Granulator** | | | | | | |
| -Drehzahl | [min$^{-1}$] | 300 | 300 | 300 | 300 | 300 |
| -Umfangsgeschw. | [m/s] | 3,2 | 3,2 | 3,2 | 3,2 | 3,2 |
| -Neigung | [Grad] | 10 | 10 | 10 | 10 | 10 |
| **Analyt. Daten** | | | | | | |
| Jodzahl | [mg/g] | 121,3 | 122,6 | 121,3 | 121,3 | 122,6 |
| DBP | [ml/100g] | 106 | 104,5 | 102,5 | 104 | 106 |
| 24M4DBP | [ml/100g] | 1,8 | - | - | - | - |
| Feinanteil: 2 min | [%] | 23,2 | 1,6 | 1,4 | 3 | 5,6 |
| Abrieb | [%] | < 2 | 27,4 | 16,3 | 17,6 | 24,8 |
| Gesamtperlhärte | [N] | | < 2 | < 2 | < 2 | < 2 |
| Einzelperlhärte, 0,7 mm | [N] | 0,015 | 0,014 | 0,015 | 0,014 | 0,014 |
| **Perlverteilung** | | | | | | |
| $d_{50}$ | [mm] | 0,85 | 0,8 | 1,08 | 0,8 | 1,3 |
| $d_{80}/d_{20}$ | | 1,5 | 1,5 | 2,1 | 2,1 | 2,0 |
| Schüttdichte | [g/l] | 236 | 244 | 236 | 232 | 224 |

**Beispiel 4:**

In einer weiteren Versuchsreihe wurde Ruß 2 mit unterschiedlichen Drehzahlen der Stachelwelle, das heißt unterschiedlichen Umfangsgeschwindigkeiten der Enden der Stacheln, granuliert. Die Drehzahl wurde von 150 $min^{-1}$ bis 500 $min^{-1}$ variiert. Die Einstellbedingungen und analytischen Daten sind in Tabelle 5 zusammengefaßt. Mit steigender Drehzahl nehmen Feinanteil und Abrieb zunächst ab und durchlaufen bei 400 $min^{-1}$ ein Minimum, um dann wieder anzusteigen. Bei 500 $min^{-1}$ tritt schon eine beträchtliche Perlzerstörung auf. Die Breite der Perlgrößenverteilung ($d_{80}/d_{20}$) zeigt das gleiche Verhalten mit einem Minimum bei 400 $min^{-1}$.

Tabelle 5: Variation der Stachelwellendrehzahl bei der Trockengranulation von Ruß 2

| Rußdurchsatz | [kg/h] | 40 | 40 | 40 | 40 | 40 | 40 |
|---|---|---|---|---|---|---|---|
| Impfgut | [kg/h] | 8 | 8 | 8 | 8 | 8 | 8 |
| **Granulator** | | | | | | | |
| -Drehzahl | [min$^{-1}$] | 150 | 250 | 350 | 400 | 450 | 500 |
| -Umfangsgeschw. | [m/s] | 1,6 | 2,7 | 3,7 | 4,2 | 4,8 | 5,3 |
| -Neigung | [Grad] | 10 | 10 | 10 | 10 | 10 | 10 |
| -Verweilzeit | [s] | | | 75,8 | | | |
| **Analyt. Daten** | | | | | | | |
| Jodzahl | [mg/g] | 121,3 | 122,6 | 122,6 | 122,6 | 122,6 | 122,6 |
| DBP | [ml/100g] | 104 | 104 | 103,5 | 105,5 | 104 | 105 |
| 24M4DBP | [ml/100g] | - | - | - | - | - | - |
| Feinanteil: 2 min | [%] | 16 | 12,6 | 4,8 | 2,8 | 9 | 15,4 |
| Abrieb | [%] | 38,4 | 34 | 13,4 | 10,2 | 12,6 | 9,4 |
| Gesamtperlhärte | [N] | < 2 | < 2 | < 2 | < 2 | < 2 | < 2 |
| Einzelperlhärte | [N] | 0,016 | 0,01 | 0,012 | 0,014 | 0,015 | 0,013 |
| **Perlverteilung** | | | | | | | |
| $d_{50}$ | [mm] | 0,85 | 1,07 | 0,55 | 0,56 | 0,42 | 0,42 |
| $d_{80}/d_{20}$ | | 8,5 | 4,4 | 2,1 | 1,8 | 2,9 | 4,7 |
| Schüttdichte | [g/l] | 253 | 232 | 224 | 224 | 236 | 236 |

EP 0 814 133 B1

**Beispiel 5:**

In einer weiteren Versuchsreihe wurde der Einfluß des Rußdurchsatzes auf das Granulationsverhalten von Ruß 2 untersucht. Der Rußdurchsatz wurde von 10 bis 60 Kg/h variiert. Die Einstellbedingungen und analytischen Daten sind in Tabelle 6 zusammengefaßt. Der Feinanteil schwankt unabhängig vom Durchsatz zwischen 1,4 und 3,2 %. Der Abrieb nimmt mit steigendem Durchsatz leicht ab.

## Tabelle 6: Variation des Rußdurchsatzes bei der Trockengranulation von Ruß 2

| Rußdurchsatz | [kg/h] | 10 | 20 | 30 | 40 | 50 | 60 |
|---|---|---|---|---|---|---|---|
| Impfgut | [kg/h] | 2 | 4 | 6 | 8 | 10 | 12 |
| **Granulator** | | | | | | | |
| -Drehzahl | $[min^{-1}]$ | 300 | 300 | 300 | 300 | 300 | 300 |
| -Umfangsgeschw. | [m/s] | 3,2 | 3,2 | 3,2 | 3,2 | 3,2 | 3,2 |
| -Neigung | [Grad] | 10 | 10 | 10 | 10 | 10 | 10 |
| **Analyt. Daten** | | | | | | | |
| Jodzahl | [mg/g] | 122,6 | 122,6 | 123,8 | 121,3 | 122,6 | 122,6 |
| DBP | [ml/100g] | 104 | 104,5 | 106 | 104 | 106 | 104 |
| 24M4DBP | [ml/100g] | - | - | - | - | - | - |
| Feinanteil: 2 min | [%] | 2,4 | 3,2 | 1,4 | 3 | 1,6 | 2,8 |
| Abrieb | [%] | 21,8 | 23,4 | 22,2 | 17,6 | 17,6 | 15,6 |
| Gesamtperlhärte | [N] | < 2 | < 2 | < 2 | < 2 | < 2 | < 2 |
| Einzelperlhärte | [N] | 0,017 | 0,015 | 0,013 | 0,014 | 0,011 | 0,015 |
| **Perlverteilung** | | | | | | | |
| $d_{50}$ | [mm] | 0,8 | 1,0 | 0,68 | 0,8 | 0,55 | 0,5 |
| $d_{80}/d_{20}$ | | 2,0 | 2,0 | 1,7 | 2,1 | 1,9 | 2,2 |
| Schüttdichte | [g/l] | 264 | 240 | 236 | 232 | 248 | 248 |

EP 0 814 133 B1

**Beispiel 6:**

Der Granulator wurde als Vorgranulator vor einer konventionellen Perltrommel gemäß Figur 3 eingesetzt, um Ruß 6 zu granulieren. Die Perltrommel hatten einen Durchmesser von 0,6 m und eine Länge von 4,0 m. Bei konventioneller Fahrweise besitzt diese Perltrommel eine Kapazität von 30 - 50 Kg/h Ruß. Durch Vorschaltung des Granulators konnte die Kapazität etwa um den Faktor 2 erhöht werden. Der Durchsatz wurde in Schritten von 20 Kg/h ausgehend von 10 Kg/h erhöht. Wurde die Perltrommel direkt mit Pulverruß beschickt, so war bis zu einem Durchsatz von 30 Kg/h noch eine Granulation möglich; bei 50 Kg/h erfolgte Perlzusammenbruch. Mit Vorgranulat konnte ein Durchsatz von 70 Kg/h erzielt werden. Zur Vorgranulation von Ruß 6 wurde der Granulator analog zu Beispiel 1 bei einem Rußdurchsatz von 40 Kg/h und einer Impfgutmenge von 11 Kg/h betrieben. Die Drehzahl der Stachelwelle betrug 350 min$^{-1}$. Die Einstellbedingungen der Perltrommel und die analytischen Daten der granulierten Ruße sind in den Tabellen 7 und 8 zusammengestellt.

Tabelle 7:   Variation des Durchsatzes bei der Trockengranulation in einer 4 m Perltrommel Ausgangsmaterial: Pulver; Ruß 6; Stampfdichte des Pulverrußes: 194 g/l

| | | | | |
|---|---|---|---|---|
| Rußdurchsatz | [kg/h] | 10 | 30 | 50 |
| **Perltrommel** | | | | |
| -Drehzahl | [min$^{-1}$] | 30 | 30 | 30 |
| **Analyt. Daten** | | | | |
| Jodzahl | [mg/g] | 95 | 95 | 98,8 |
| DBP | [ml/100g] | 51,3 | 50,7 | 53,0 |
| Feinanteil: 2 min | [%] | 17,6 | 13,6 | k.M.*) |
| Abrieb | [%] | 10,8 | 5 | k.M. |
| Gesamtperlhärte | [N] | 3 | 8 | k.M. |
| Einzelperlhärte: 0,7 mm | [N] | 0,073 | 0,033 | k.M. |
| **Perlverteilung** | | | | |
| d$_{50}$ | [mm] | 0,28 | 0,17 | |
| d$_{80}$/d$_{20}$ | | 4,4 | 2,3 | |
| Schüttdichte | [g/l] | 467 | 476 | 206 |

*) k.M = keine Messung, da die Perlbildung zusammenbrach

Tabelle 8: Variation des Durchsatzes bei der Trockengranulation in einer 4 m Perltrommel
Ausgangsmaterial: Vorgranulat; Ruß 6; Schüttdichte des Vorgranulats: 373 g/l

| | | | | | |
|---|---|---|---|---|---|
| Rußdurchsatz | [kg/h] | 10 | 30 | 50 | 70 |
| **Perltrommel** | | | | | |
| -Drehzahl | [min$^{-1}$] | 30 | 30 | 30 | 30 |
| **Analyt. Daten** | | | | | |
| Jodzahl | [mg/g] | 96,3 | 96,3 | 96,3 | 99,6 |
| DBP | [ml/100g] | 52,3 | 50,7 | 50,7 | 52,0 |
| Feinanteil: 2 min | [%] | 12 | 1,4 | 2,8 | 2,4 |
| Abrieb | [%] | 2,6 | 5,0 | 2,4 | 6,4 |
| Gesamtperlhärte | [N] | 8 | 8 | 7 | 4 |
| Einzelperlhärte: 0,7 mm | [N] | 0,048 | 0,057 | 0,05 | 0,042 |
| **Perlverteilung** | | | | | |
| d$_{50}$ | [mm] | 0,25 | 0,76 | 0,4 | 0,5 |
| d$_{80}$/d$_{20}$ | | 3,2 | 2,3 | 3,1 | 2,1 |
| Schüttdichte | [g/l] | 480 | 456 | 480 | 428 |

**Patentansprüche**

1. Verfahren zur kontinuierlichen Trockengranulation von Pulverruß,
**dadurch gekennzeichnet**,

18

daß die Granulation in einem Stachelwellengranulator durchgeführt wird, der in einem kreiszylindrischen, trommelförmigen Stator mit einer Längsachse eine axial angeordnete Stachelwelle aufweist, die um die Längsachse des Stators rotiert und den Pulverruß bei gleichzeitiger Granulation vom Einlauf zum Auslauf des Granulators befördert, wobei die Stacheln einen Durchmesser und eine Länge aufweisen und auf der Welle mit einem axialen Versatz gegeneinander längs einer Schraubenlinie um die Welle herum angeordnet sind und die maximale Umfangsgeschwindigkeit der Enden der Stacheln zwischen 1 und 6 m/s und die mittlere Verweilzeit des Rußes im Granulator zwischen 20 und 600 Sekunden betragen.

**2.** Verfahren nach Anspruch 1,
**dadurch gekennzeichnet**,
daß der axiale Versatz zwischen benachbarten Stacheln kleiner als ihr Durchmesser ist, so daß eine lückenlose Überdeckung der Stacheln längs der Achse vorliegt und die Länge der Stacheln so gewählt ist, daß der lichte Abstand zwischen den Enden der Stacheln und der Statorwand 0,5 bis 3 mm beträgt.

**3.** Verfahren nach Anspruch 2,
**dadurch gekennzeichnet**,
daß die Stacheln auf der Welle längs zweier oder mehrerer Schraubenlinien angeordnet sind.

**4.** Verfahren nach einem der vorstehenden Ansprüche,
**dadurch gekennzeichnet**,
daß der Stator während der Granulation auf eine Temperatur im Bereich zwischen 50 und 150, bevorzugt zwischen 80 und 120°C temperiert ist.

**5.** Verfahren nach einem der vorstehenden Ansprüche,
**dadurch gekennzeichnet**,
daß Stator und Stacheln des Stachelwellengranulators im Frequenzbereich von 50 bis 300 Hz zu Schwingungen angeregt wird.

**6.** Verfahren nach einem der vorstehenden Ansprüche,
**dadurch gekennzeichnet**,
daß die Verweilzeit des Rußes im Granulator durch Anheben des Auslaufs gegenüber dem Einlauf eingestellt wird, wobei der Winkel zwischen der Längsachse des Granulators und der Horizontalen einen Wert zwischen 0 und 20° aufweisen kann.

**7.** Verfahren nach einem der vorstehenden Ansprüche,
**dadurch gekennzeichnet**,
daß dem Pulverruß bis 50, bevorzugt 5 bis 30 Gew.-%, granulierter Ruß als Impfgut zugemischt werden.

**8.** Verfahren nach einem der vorstehenden Ansprüche,
**dadurch gekennzeichnet**,
daß der Pulverruß vor dem Granulieren auf eine Stampfdichte von 150 bis 300 g/l vorverdichtet wird.

**9.** Verfahren nach einem der vorstehenden Ansprüche,
**dadurch gekennzeichnet**,
daß dem Granulator eine Trockenperltrommel nachgeschaltet wird.


**Claims**

**1.** A process for continuous dry granulation of powdered carbon black,
characterised in that
granulation is performed in a toothed shaft granulator which has, in a circular cylindrical, drum-shaped stator with a longitudinal axis, an axially arranged toothed shaft which rotates about the longitudinal axis of the stator and conveys the powdered carbon black from the entrance to the exit of the granulator, with simultaneous granulation, wherein the teeth have a diameter and a length and are arranged on the shaft, axially offset with respect to each other, along a helical line around the shaft and the maximum peripheral speed of the ends of the teeth is between 1 and 6 m/s and the average residence time for the carbon black in the granulator is between 20 and 600 seconds.

**2.** A process according to claim 1,
characterised in that
the axial shift between neighbouring teeth is less than their diameter so that complete covering is provided by the teeth along the axis and the length of the teeth is selected so that the clear space between the ends of the teeth and the stator wall is 0.5 to 3 mm.

**3.** A process according to claim 2,
characterised in that
the teeth are arranged on the shaft along two or more helical lines.

**4.** A process according to one of the preceding claims,
characterised in that
the stator is maintained at a constant temperature in the range between 50 and 150°C, preferably between 80 and 120°C, during granulation.

**5.** A process according to one of the preceding claims,
characterised in that
stator and teeth in the toothed shaft granulator are stimulated to vibrate in the frequency range from 50 to 300 Hz.

**6.** A process according to one of the preceding claims,
characterised in that
the residence time for carbon black in the granulator is adjusted by raising the exit with respect to the entrance, wherein the angle between the longitudinal axis of the granulator and the horizontal may have a value between 0 and 20°.

**7.** A process according to one of the preceding claims,
characterised in that
up to 50, preferably 5 to 30 wt.%, of granulated carbon black is admixed with the powdered carbon black as seeding material.

**8.** A process according to one of the preceding claims,
characterised in that
the powdered carbon black is precompacted to a compacted bulk density of 150 to 300 g/l prior to being granulated.

**9.** A process according to one of the preceding claims,
characterised in that
a dry pelletising drum is connected in series downstream of the granulator.

**Revendications**

**1.** Procédé de granulation à sec en continu de noir de carbone,
caractérisé en ce qu'
on conduit la granulation dans un granulateur avec arbre à picots, qui présente dans un stator circulo-cylindrique en forme de tambour ayant un axe longitudinal, un arbre à picots disposé axialement, qui tourne autour de l'axe longitudinal du stator, et qui transporte le noir de carbone pulvérulent, en le granulant simultanément, de l'entrée jusqu'à la sortie du granulateur, les picots présentant un certain diamètre et une certaine longueur et étant disposés sur l'arbre, avec un décalage axial les uns par rapport aux autres le long d'une ligne d'hélice autour de l'arbre, et la vitesse circonférentielle maximale des extrémités de picots se situant entre 1 et 6 m/s, et le temps de séjour moyen du noir de carbone dans le granulateur se situant entre 20 et 600 secondes.

**2.** Procédé selon la revendication 1,
caractérisé en ce que
le décalage axial entre les picots voisins est inférieur à leur diamètre, si bien que l'on a recouvrement sans faille des picots le long de l'axe et que la longueur des picots est choisie de manière que l'intervalle libre entre les extrémités des picots et la paroi du stator soit compris entre 0,5 et 3 mm.

**3.** Procédé selon la revendication 2,

caractérisé en ce que
les picots sont disposés sur l'arbre le long de deux ou plusieurs lignes d'hélice.

4. Procédé selon l'une des revendications précédentes,
caractérisé en ce que
le stator est réglé au cours de la granulation à une température comprise entre 50 et 150°C, de préférence entre 80 et 120°C.

5. Procédé selon l'une des revendications précédentes,
caractérisé en ce que
le stator et les picots du granulateur sont mis en vibration à une fréquence comprise entre 150 et 300 Hertz.

6. Procédé selon l'une des revendications précédentes,
caractérisé en ce que
le temps de séjour du noir de carbone dans le granulateur est réglé en relevant la sortie par rapport à l'entrée, l'angle entre l'axe longitudinal du granulateur et l'horizontale pouvant présenter une valeur comprise entre 0 et 20°.

7. Procédé selon l'une des revendications précédentes,
caractérisé en ce qu'
on mélange au noir de carbone pulvérulent jusqu'à 50 %, de préférence de 5 à 30 % en poids, de noir de carbone granulé comme matériau d'ensemencement.

8. Procédé selon l'une des revendications précédentes,
caractérisé en ce qu'
on prédensifie le noir de carbone pulvérulent, avant la granulation, à une densité de compression de 150 à 300 g/l.

9. Procédé selon l'une des revendications précédentes,
caractérisé en ce qu'
on insère après le granulateur un tambour de granulation à sec.

Figur 1

Perlruss

n: 150 – 500 1/min

Figur 2

Figur 3